# FASCICULE DE BREVET EUROPEEN

(11) **EP 0 790 471 B1**
(45) Date de publication et mention de la délivrance du brevet: **13.06.2001**
(21) Numéro de dépôt: 97400279.2
(22) Date de dépôt: 07.02.1997
(51) Int. Cl.: F24D 3/12, F24D 19/10

(54) **Perfectionnements aux dispositifs de chauffage central à deux circuits de caractéristiques thermiques différentes**
Zentralheizungsanlage mit zwei Kreisläufen mit unterschiedlichen thermischen Eigenschaften
Central heating system with two circuits having different thermal characteristics

(30) Priorité: 13.02.1996 FR 9601746
(43) Date de publication de la demande: 20.08.1997
(73) Titulaire: CHAFFOTEAUX ET MAURY, 78400 Chatou (FR)
(72) Inventeur: Quere, Albert, 22000 Saint-Brieuc (FR); Bielle, Sylvain, 22950 Tregueux (FR)
(74) Mandataire: Bérogin, Francis

(56) Documents cités:
- EP-A- 0 427 655
- DE-A- 3 227 326

## Description

L'invention est relative aux installations permettant d'établir un chauffage central par circulation d'eau chaude ou liquide caloporteur analogue -qui sera désigné par le mot "eau" dans la suite dans un souci de simplification- dans l'un et/ou l'autre de deux circuits fermés présentant des caractéristiques thermiques différentes, savoir un premier circuit d'inertie thermique relativement faible comprenant des radiateurs et parcouru par de l'eau à une température relativement élevée, notamment comprise entre 50 et 80°C, et un second circuit, d'inertie thermique relativement élevée, comprenant des tubulures dites de plancher, en général relativement longues et de petit diamètre, parcouru par de l'eau à une température relativement basse, notamment comprise entre 25 et 45°C.

De telles installations sont intéressantes notamment :
- pour l'équipement sélectif des maisons individuelles comprenant deux parties se prêtant bien, respectivement, à un chauffage central par radiateurs et à un chauffage central par plancher et destinées par exemple à être occupées respectivement la nuit et le jour,
- ou pour l'équipement cumulatif de certains logements pour lesquels les chauffages centraux par plancher et par radiateurs constituent respectivement un chauffage de base correspondant à une température ambiante de l'ordre de 15°C et un chauffage d'appoint propre à élever la température ambiante jusqu'à une valeur de confort (par exemple 20°C).

Elles permettent en particulier de bénéficier des avantages des chaudières à condensation tant que la température demandée pour l'eau de chauffage demeure inférieure à un seuil donné relativement bas, de l'ordre de 50°C : cette température est en effet suffisante pour un chauffage central par plancher.

L'invention vise plus particulièrement, dans les installations de chauffage considérées, les dispositifs de raccordement interposés entre d'une part la chaudière qui chauffe directement ou non l'eau de chauffage et d'autre part les deux circuits de chauffage central récepteurs et distributeurs des calories.

Elle vise plus particulièrement encore ceux, desdits dispositifs de raccordement, qui comprennent :
- un échangeur thermique constitué par un tronçon primaire et par un tronçon secondaire faisant partie du second circuit de chauffage central à relativement forte inertie thermique,
- une vanne à trois voies permettant de brancher à volonté la chaudière sur le premier circuit de chauffage central ou sur le tronçon primaire de l'échangeur,
- et une pompe d'entraînement de l'eau en circulation dans le second circuit.

Dans les modes de réalisation connus de tels dispositifs, il a été proposé de constituer l'échangeur thermique défini ci-dessus par une bouteille casse-pression dans laquelle les deux tronçons primaire et secondaire de l'échangeur sont confondus (document EP-0 427 655 B1).

Une telle construction présente l'inconvénient suivant : dans la bouteille, on trouve mélangés les volumes d'eau appelés à circuler aussi bien dans la chaudière que dans le premier et le second circuit.

Or, l'eau en circulation peut être portée à une température très élevée (par exemple de 85°C) lorsqu'elle traverse la chaudière et à une température encore relativement élevée, dépassant couramment 70°C, lorsqu'elle circule dans le premier circuit.

Les conduites traversées par ces courants d'eau relativement chaude sont en général au moins en partie constituées en métal et les contacts établis entre les plages métalliques correspondantes et lesdits courants d'eau chaude, courants souvent porteurs d'oxygène dissous introduit dans ceux-ci à partir de l'extérieur à travers les défauts d'étanchéité desdites conduites, sont des sources de rouille ou corrosion entraînant la création de dépôts formant avec l'eau des boues.

Les courants d'eau considérés étant mélangés dans la bouteille avec les courants d'eau beaucoup moins chauds affectés à la circulation dans les planchers, on observe au niveau de cette bouteille un transfert des boues transportées par les courants chauds vers les courants plus froids et ces boues risquent de créer des encrassements ou autres désordres dans les tubulures étroites et longues du second circuit affecté au chauffage central par planchers.

Un tel transfert est quasiment évité avec les constructions proposées par l'invention.

A cet effet, les dispositifs de raccordement selon l'invention sont essentiellement caractérisés en ce que d'une part les tronçons primaire et secondaire constitutifs de leur échangeur thermique sont hydrauliquement séparés l'un de l'autre et en ce que d'autre part un conduit de section réduite relie respectivement deux points des conduites qui desservent lesdits tronçons primaire et secondaire.

Dans des modes de réalisation préférés, on a recours en outre à l'une et/ou à l'autre des dispositions suivantes :
- la longueur du conduit de section réduite est de l'ordre de quelques centimètres et sa section est comprise entre 0,5 et 1 cm²,
- le conduit de section réduite est disposé à une petite distance, de l'ordre de 5 à 10 cm, de l'échangeur thermique,
- l'échangeur thermique est du type à plaques brasées,
- les différents composants constitutifs du dispositif de raccordement, comprenant en particulier la vanne à trois voies, la pompe d'entraînement de l'eau dans le second circuit de chauffage central, l'échangeur thermique et un boîtier de gestion électronique, ainsi qu'éventuellement un raccord de remplissage, sont montés sur une même barrette préfabriquée facile à monter entre la chaudière et les deux circuits de chauffage central,
- il est prévu un ensemble de gestion électronique associé à une sonde thermique extérieure et à une sonde sensible à la température de l'eau circulant dans le second circuit, et de préférence en outre à une sonde sensible à la température de l'eau sortant de la chaudière et à au moins un thermostat d'ambiance, ensemble propre à commander et à régler l'allumage de la chaudière, à commander les changements de position de la vanne à trois voies et à commander les excitations de la pompe d'entraînement de l'eau dans le second circuit de façon à donner automatiquement à chaque instant à la température de l'eau circulant dans le second circuit une valeur prédéterminée comprise entre 20 et 45°C,
- l'ensemble de gestion selon l'alinéa précédent comprend des moyens pour afficher deux températures de consigne pour l'eau sortant de la chaudière, températures de l'ordre de respectivement 45°C et 70°C, et de préférence une troisième température de consigne de l'ordre de 60°C pour l'eau sortant de la chaudière, et des moyens pour commander et régler automatiquement à chaque instant l'allumage de la chaudière, la mise en place de la vanne à trois voies et l'excitation de la pompe du second circuit en fonction de ces températures de consigne et des autres données introduites dans l'ensemble audit instant de façon à optimiser le fonctionnement de la chaudière à cet instant.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre schématiquement un dispositif de chauffage central établi selon l'invention, le fonctionnement illustré correspondant à un chauffage central par planchers.

La figure 2 montre aussi schématiquement une portion du dispositif ci-dessus, le fonctionnement illustré correspondant à un chauffage central par radiateurs.

La figure 3 est un schéma reprenant certains éléments de la figure 1 et ajoutant à ceux-ci quelques autres éléments explicatifs de la gestion électronique du dispositif.

L'installation de chauffage central considérée comprend, d'une façon connue en soi :
- une chaudière 1 comportant elle-même un brûleur à gaz 2, une tubulure 3 d'eau (ou autre liquide caloporteur désigné ici par le mot "eau" pour simplifier, mais d'une façon non limitative) chauffable à partir des flammes engendrées par le brûleur et s'étendant d'une entrée A à une sortie B, et une pompe 4 montée sur ladite tubulure 3 et propre à entraîner l'eau dans celle-ci,
- un premier circuit de chauffage central 5 présentant une inertie thermique relative faible, s'étendant d'un point C à un point D et équipé d'au moins un radiateur 6,
- un second circuit de chauffage central 7 présentant une inertie thermique relativement élevée s'étendant d'un point E à un point F et équipé d'au moins une tubulure 8 susceptible d'être noyée dans un plancher, tubulure présentant en général une relativement grande longueur et une relativement petite section,
- et un ensemble permettant de raccorder, au moins indirectement, les points C et E au point B et les points D et F au point A.

Plus précisément,
- le point C est raccordé au point B par un tronçon de conduite 9 équipé d'une vanne 10 à trois voies,
- le point D est raccordé au point A par un tronçon de conduite 11,
- la vanne 10 est raccordée à un point G du tronçon 11 par un tronçon 12 dont une portion constitue le primaire 13 d'un échangeur thermique 14,
- et les points E et F sont raccordés l'un à l'autre par un tronçon de conduite 15 dont une portion constitue le secondaire 16 de l'échangeur thermique 14.

En outre :
- une pompe d'entraînement 17 est montée sur le tronçon 15 de façon à entraîner le volume d'eau contenu dans ledit tronçon 15 et dans le circuit 8,
- et un vase d'expansion ou analogue 18 est prévu en un point haut de la boucle constituée par la tubulure 3 et le circuit 5.

Au lieu de constituer l'échangeur thermique 14 par une bouteille casse-pression au sein de laquelle le primaire et le secondaire sont confondus en une seule et même capacité de sorte que les différents courants d'eau y sont intimement mélangés, comme dans les réalisations connues ci-dessus évoquées, on constitue ici le primaire 13 et le secondaire 16 dudit échangeur 14 par deux circuits séparés et enchevêtrés de façon telle que les calories de l'eau relativement chaude circulant dans le primaire soient efficacement transmises à l'eau plus froide circulant dans le secondaire.

Un tel échangeur 14 est avantageusement constitué par une succession de plaques brasées de proche en proche les unes sur les autres le long de leurs périphéries.

En outre, on établit une communication entre les deux tronçons 12 et 15 à l'aide d'un conduit 19 de petite section.

La longueur de ce tronçon est avantageusement de l'ordre de quelques cm, c'est-à-dire comprise entre 3 et 5 cm, sa section étant avantageusement comprise entre 0,5 et 1 cm2.

Le fonctionnement de l'installation ci-dessus décrite est le suivant.

On suppose qu'en temps normal, par exemple au cours de la journée, la seule demande de chauffage concerne la zone à "chauffage plancher".

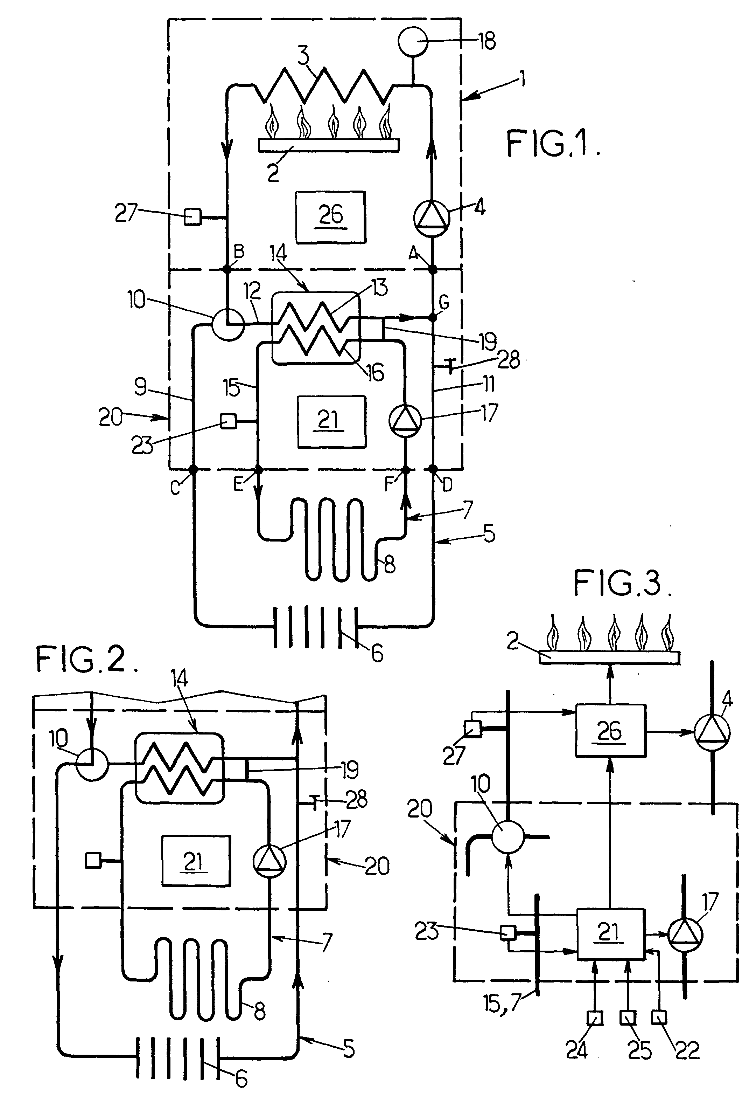

La vanne 10 se trouve alors en sa position illustrée sur la figure 1, pour laquelle la chaudière 1 est branchée sur le primaire 13 de l'échangeur 14.

La pompe 4 est alors excitée et le brûleur 2, allumé.

La pompe 17 est également excitée et les calories apportées au primaire 13 de l'échangeur 14 sont transférées au courant d'eau qui circule dans le secondaire 16 de cet échangeur, ce qui le réchauffe à une température relativement peu élevée, généralement inférieure à 50°C, suffisante pour chauffer les éléments de plancher 8.

Il est à noter que, dans ces conditions, l'eau portée à température élevée qui traverse la chaudière demeure pratiquement isolée de l'eau à température plus basse qui circule dans le circuit "plancher" 7.

Il existe certes une possibilité de communication entre ces deux courants au niveau du petit conduit de liaison 19.

Mais, dans ce conduit 19, l'eau demeure pratiquement stagnante.

En effet, les deux capacités constituées, la première par la tubulure 3 et le tronçon 12 et la seconde par le circuit 8 et le tronçon 15 sont toutes les deux pleines d'eau et il n'y a donc aucun appel d'eau de l'une de ces capacités vers l'autre.

En revanche, la présence dudit conduit 19 est précieuse pour les deux raisons suivantes.

En premier lieu, la communication établie par cet conduit 19 permet de faire bénéficier automatiquement le circuit 7 de chauffage par planchers 8 du vase d'expansion 18 : en effet, les dilatations ou contractions de l'eau dues à ses variations de température et à son évaporation locale donnent lieu à des déplacements de volume d'eau non nuls, mais infimes, à travers ladite conduite 19, ce qui assure la sécurité de l'installation sans pour autant risquer de produire des mélanges indésirables entre l'eau très chaude et risquant d'être polluée qui traverse la chaudière et l'eau beaucoup moins chaude qui circule dans le circuit des planchers.

En second lieu, la présence du conduit 19 permet de remplir en eau l'ensemble de l'installation à partir d'une seule entrée localisée par exemple en un point du tronçon de conduite 11 ou du circuit 5 des radiateurs : ce point est matérialisé sur les figures 1 et 2 par un raccord équipé d'une vanne d'arrêt 28.

Quand un apport de calories est appelé vers le circuit 5 des radiateurs, la vanne 10 à trois voies passe en sa position illustrée sur la figure 2.

Pour cette position, la totalité du courant d'eau quittant la chaudière 1 est envoyée dans le circuit 5 à radiateurs 6, le circuit à planchers 7 étant alors mis hors service.

Il est à noter que, dans ce cas, on n'observe pas plus de circulation d'eau que précédemment dans le conduit 19 : seul un tout petit débit d'eau est alors envisageable dans ce conduit, pour compenser la très légère réduction de volume de l'eau présente dans le circuit à planchers en raison de son refroidissement.

Pendant les périodes de chauffage par les radiateurs 6, l'excitation de la pompe 17 peut être à volonté maintenue ou interrompue.

Selon un troisième mode de réalisation non représenté sur les dessins, la vanne 10 est placée en une position intermédiaire comprise entre ses deux positions extrêmes illustrées respectivement sur les figures 1 et 2.

Pour cette position intermédiaire, l'eau chauffée sortant de la chaudière est envoyée en partie dans chacune des deux directions précédentes, c'est-à-dire dans le circuit 5 à radiateurs 6 et dans le primaire 13 de l'échangeur 14.

Les pourcentages respectifs de ces deux parties peuvent être prédéterminés et par exemple égaux entre eux ou, selon une variante, ils peuvent être réglables à volonté.

Pour ce qui est de la construction du dispositif de chauffage ci-dessus décrit, on monte avantageusement sur une même "barrette" de raccordement 20 l'ensemble des composants suivants : tronçons de conduite 9, 11, 12, 15 et 19, vanne 10 à trois voies, échangeur 14 et pompe de circulation 17.

Cette barrette 20 est équipée de raccords terminant les tronçons 9, 11 et 15 et susceptibles d'être facilement connectés de façon amovible et étanche aux extrémités correspondantes des circuits extérieurs 3, 5 et 7 aux points A, B, C, D, E et F.

Une telle conception est particulièrement avantageuse vu qu'elle permet d'adapter très facilement la chaudière 1 à la desserte des deux circuits de chauffage central 5 et 6 alors que d'autres barrettes amovibles comparables, mais agencées différemment, permettraient d'adapter la même chaudière à la desserte d'autres circuits, et en particulier à celle d'un circuit unique de chauffage central combiné à un circuit de puisage d'eau chaude.

Pour ce qui est de la commande ou gestion du dispositif de chauffage ci-dessus décrit, on l'assure avantageusement à l'aide d'un circuit électronique 21 (figure 3) qui est associé :
- essentiellement à une sonde de température extérieure 22 et à un sonde 23 sensible à la température de l'eau circulant dans le circuit 7 à planchers,
- et de préférence en outre à deux thermostats d'ambiance 24 et 25 situés respectivement dans les locaux destinés à être chauffés par les deux circuits de chauffage central 5 à radiateurs et 7 à planchers.

Ledit circuit électronique 21 est agencé de façon à commander la vanne à trois voies 10 ainsi que l'excitation de la pompe 17 et à envoyer des signaux d'information au circuit électronique 26 habituellement prévu pour gérer la chaudière, c'est-à-dire commander les allumages du brûleur 3 et les excitations de la pompe 4, ledit circuit 26 étant lui-même agencé de façon à exploiter les signaux reçus d'une sonde 27 sensible à la température de l'eau qui sort de la chaudière.

Le boîtier qui contient le circuit électronique 21 est monté sur la barrette de raccordement 20, dans le cas où une telle barrette est prévue.

Les sondes 23 et 27 peuvent être agencées de façon à enregistrer des valeurs de consigne prédéterminées pour les températures d'eau qu'elles ont pour mission de détecter, ces sondes étant alors associées respectivement à des portions, des circuits 21 et 26, propres à déclencher ou interrompre des commandes appropriées lors des franchissements desdites valeurs de consigne.

D'une façon générale, l'ensemble est agencé de façon à donner automatiquement à la température de l'eau circulant dans le circuit de chauffage par plancher une valeur, comprise entre 20 et 45°C, qui peut être prédéterminée par affichage manuel.

Dans une variante perfectionnée, on affiche à l'avance dans le circuit 21 et/ou dans le circuit 26 au moins deux températures de consigne prédéterminées T₁ et T₂ pour l'eau de la chaudière 1, températures correspondant respectivement aux deux régimes de chauffage central par plancher et de chauffage central par radiateurs qui sont obtenus pour les deux positions extrêmes de la vanne 10 à trois voies : on obtient ainsi automatiquement une optimisation du fonctionnement de la chaudière pour chacune desdites positions.

Ce perfectionnement peut être étendu avec l'affichage préalable, dans le circuit 21 et/ou dans le circuit 26, d'une troisième température de consigne T₃ pour l'eau sortant de la chaudière, température correspondant à un fonctionnement optimal "intermédiaire" avec la vanne 10 à trois voies en une position comprise entre ses deux positions extrêmes.

A titre d'exemple, on peut donner aux trois températures de consigne T₁, T₂ et T₃ les trois valeurs 45, 70 et 60°C.

En suite de quoi, et quel que soit le mode de réalisation adopté, on obtient finalement un dispositif de chauffage central assurant la desserte de deux circuits d'inerties thermiques différentes, dispositif dont la constitution, le fonctionnement et les avantages (en particulier la bonne isolation du circuit de chauffage central à forte inertie vis-à-vis de l'autre circuit de chauffage central et de la chaudière elle-même, isolation obtenue sans perdre le bénéfice de la présence du vase d'expansion pour ledit circuit de chauffage à forte inertie) résultent suffisamment de ce qui précède.

## Revendications

1. Installation permettant d'établir à partir d'une chaudière (1) un chauffage central par circulation d'eau chaude dans l'un et/ou l'autre de deux circuits fermés présentant des caractéristiques thermiques différentes, savoir un premier circuit (5) d'inertie thermique relativement faible comprenant des radiateurs (6) et parcouru par de l'eau à température relativement élevée, et un second circuit (7), d'inertie thermique relativement élevée, comprenant des tubulures dites de plancher (8), parcouru par de l'eau à température relativement basse, cette installation ayant un dispositif de raccordement interposé entre d'une part la chaudière (1) qui chauffe directement ou non l'eau de chauffage et d'autre part les deux circuits, dispositif comprenant un échangeur thermique (14) constitué par un tronçon primaire (13) et par un tronçon secondaire (16) faisant partie du second circuit (7), une vanne (10) à trois voies permettant de brancher à volonté la chaudière sur le premier circuit ou sur le tronçon primaire de l'échangeur, et une pompe (17) d'entraînement de l'eau en circulation dans le second circuit, caractérisé en ce que d'une part les tronçons primaire (13) et secondaire (16) constitutifs de l'échangeur thermique (14) sont hydrauliquement séparés l'un de l'autre et en ce que d'autre part un conduit (19) de section réduite relie respectivement deux points des conduites (12, 15) qui desservent lesdits tronçons primaire et secondaire

2. Installation selon la revendication 1, caractérisé en ce que la longueur du conduit (19) de section réduite est de l'ordre de quelques centimètres et en ce que sa section est comprise entre 0,5 et 1 cm².

3. Installation selon l'une quelconque des précédentes revendications, caractérisé en ce que le conduit (19) de section réduite est disposé à une petite distance, de l'ordre de 5 à 10 cm, de l'échangeur thermique (14).

4. Installation selon l'une quelconque des précédentes revendications, caractérisé en ce que l'échangeur thermique (14) est du type à plaques brasées.

5. Installation selon l'une quelconque des précédentes revendications, caractérisé en ce que ses différents composants comprenant en particulier la vanne (10) à trois voies, la pompe (17) d'entraînement de l'eau dans le second circuit (7), l'échangeur thermique (14) et un boîtier de gestion électronique (21), ainsi qu'éventuellement un raccord de remplissage (28), sont montés sur une même barrette préfabriquée (20) facile à monter entre la chaudière (1) et les deux circuits (5 et 7).

6. Installation selon l'une quelconque des précédentes revendications, caractérisé en ce qu'il comprend un ensemble de gestion électronique (21) associé à une sonde thermique extérieure (22) et à une sonde (23) sensible à la température de l'eau circulant dans le second circuit (7), et de préférence en outre à une sonde (27) sensible à la température de l'eau sortant de la chaudière et à au moins un thermostat d'ambiance (24,25), ensemble propre à commander et à régler l'allumage de la chaudière (1), à commander les changements de position de la vanne à trois voies (10) et à commander les excitations de la pompe (17) d'entraînement de l'eau dans le second circuit de façon à donner automatiquement à chaque instant à la température de l'eau circulant dans le second circuit une valeur prédéterminée comprise entre 20 et 45°C.

7. Installation selon la revendication 6, caractérisé en ce que son ensemble de gestion électronique (21) comprend des moyens pour afficher deux températures de consigne pour l'eau sortant de la chaudière, températures de l'ordre de respectivement 45°C et 70°C, et de préférence une troisième température de consigne de l'ordre de 60°C pour l'eau sortant de la chaudière, et des moyens pour commander et régler automatiquement à chaque instant l'allumage de la chaudière (1), la mise en place de la vanne (10) à trois voies et l'excitation de la pompe (17) du second circuit en fonction de ces températures de consigne et des autres données introduites dans l'ensemble de gestion (21) audit instant de façon à optimiser le fonctionnement de la chaudière à cet instant.

## Claims

1. Installation for establishing central heating from a boiler (1) by circulating hot water through one and/or the other of two closed circuits having different thermal characteristics, namely a first circuit (5) with a relatively low thermal inertia including radiators (6) and through which water passes at a relatively high temperature, and a second circuit (7) with a relatively high thermal inertia, including so-called floor tubes (8), through which water passes at a relatively low temperature, this installation having a connecting device interposed between on the one hand the boiler (1) which does or does not heat the heating water directly and on the other hand the two circuits, the device comprising a heat exchanger (14) consisting of a primary section (13) and a secondary section (16) forming part of the second circuit (7), a three-way valve (10) enabling the boiler to be connected at will to the first circuit or to the primary section of the exchanger, and a pump (17) for propelling water in circulation through the second circuit, characterized in that on the one hand the primary (13) and secondary (16) sections constituting the heat exchanger (14) are hydraulically separated from each other and in that on the other hand a pipe (19) with a reduced cross section connects respectively two points of the pipes (12, 15) which serve the said primary and secondary sections.

2. Installation according to claim 1, characterized in that the length of the pipe (19) with a reduced cross section is of the order of a few centimetres and in that its cross section is between 0.5 and 1 cm2.

3. Installation according to any one of the preceding claims, characterized in that the pipe (19) with a reduced cross section is positioned a short distance, of the order of 5 to 10 cm, from the heat exchanger (14).

4. Installation according to any one of the preceding claims, characterized in that the heat exchanger (14) is of the brazed plate type.

5. Installation according to any one of the preceding claims, characterized in that its different components comprising in particular the three-way valve (10), the pump (17) for propelling water in circulation through the second circuit (7), the heat exchanger (14) and an electronic control box (21), as well as optionally a filling connection (28), are mounted on the same easy-to-mount prefabricated strip (20) between the boiler (1) and the two circuits (5 and 7).

6. Installation according to any one of the preceding claims, characterized in that it includes an electronic management assembly (21) associated with an external heat sensor (22) and with a sensor (23) sensitive to the temperature of the water circulating in the second circuit (7) and preferably, in addition, with a sensor (27) sensitive to the temperature of the water leaving the boiler and to at least one ambient thermostat (24, 25), an assembly which is able to control and regulate the ignition of the boiler (1), to control the changes in position of the three-way valve (10) and to control the excitations of the pump (17) for propelling water through the second circuit so as to give automatically at each instant a predetermined value of between 20 and 45° to the temperature of the water circulating through the second circuit.

7. Installation according to claim 6, characterized in that its electronic management assembly (21) includes means for assigning two set temperatures for the water leaving the boiler, temperatures of the order of 45°C and 70°C respectively, and preferably a third set temperature of the order of 60°C for the water leaving the boiler, and means for controlling and regulating at any instant the ignition of the boiler (1), the setting of the three-way valve (10) and the excitation of the pump (17) of the second circuit as a function of these set temperatures and of other data introduced into the management assembly (21) at the said instant so as to optimise the operation of the boiler at this instant.

## Patentansprüche

1. Anlage, welche es gestattet, ausgehend von einem Kessel (1) eine Zentralheizung zu bilden mittels Umlauf von Warmwasser in einem und/oder einem weiteren von zwei geschlossenen Kreisläufen mit voneinander verschiedenen thermischen Charakteristiken, nämlich einem ersten Kreislauf (5) mit einem relativ geringen Wärmeleitwiderstand, der Heizkörper (6) beinhaltet und von Wasser mit einer relativ hohen Temperatur durchlaufen wird, und einem zweiten Kreislauf (7) mit einem relativ hohen Wärmeleitwiderstand, der Fußbodenrohrleitungen (8) beinhaltet und von Wasser mit einer relativ niedrigen Temperatur durchlaufen wird, wobei diese Anlage eine Verbindungsvorrichtung aufweist, die zwischen einerseits den Kessel (1), der auf direktem oder indirektem Wege Heizungswasser erwärmt, und andererseits die beiden Kreisläufe geschaltet ist, welche Vorrichtung einen Wärmetauscher (14) aufweist, bestehend aus einem Primärteilabschnitt (13) und einem Sekundärteilabschnitt (16), der einen Teil des zweiten Kreislaufs (7) darstellt, ein Drei-Wege-Ventil (10), das es gestattet, den Kessel nach Belieben an den ersten Kreislauf oder an den Primärteilabschnitt des Austauschers anzuschließen, und eine Pumpe (17) zum Fördern von Wasser, das im zweiten Kreislauf umläuft, dadurch gekennzeichnet, daß zum einen der Primärteilabschnitt (13) und der Sekundärteilabschnitt (16), welche den Wärmetauscher (14) bilden, hydraulisch voneinander getrennt sind, und daß zum anderen eine Leitung (19) mit einem geringen Querschnitt jeweils zwei Punkte der Leitungen (12, 15) verbindet, welche den Primär- und Sekundärteilabschnitt bedienen.

2. Anlage nach Anspruch 1, dadurch gekennzeichnet, daß die Länge der Leitung (19) mit einem geringen Querschnitt in der Größenordnung von mehreren Zentimetern liegt, und ihr Querschnitt zwischen 0,5 und 1 cm² beträgt.

3. Anlage nach einem der vorhergehenden Ansprüche, dadurch gekennzeichnet, daß die Leitung (19) mit einem geringen Querschnitt in einem geringen Abstand in der Größenordnung von 5 bis 10 cm vom Wärmetauscher (14) angeordnet ist.

4. Anlage nach einem der vorhergehenden Ansprüche, dadurch gekennzeichnet, daß der Wärmetauscher (14) vom Typ mit gelöteten Platten ist.

5. Anlage nach einem der vorhergehenden Ansprüche, dadurch gekennzeichnet, daß ihre verschiedenen Bestandteile, welche insbesondere das Drei-Wege-Ventil (10), die Pumpe (17) zum Fördern von Wasser im zweiten Kreislauf (7), den Wärmetauscher (14) und einen elektronischen Steuerkasten (21) sowie gegebenenfalls einen Nachfüllanschluß (28) umfassen, an einer gleichen vorgefertigten Leiste (20) angebracht sind, die einfach zwischen dem Kessel (1) und den beiden Kreisläufen (5 und 7) anzubringen ist.

6. Anlage nach einem der vorhergehenden Ansprüche, dadurch gekennzeichnet, daß sie eine elektronische Steuereinheit (21) aufweist, die mit einem Außentemperaturfühler (22) und einem Fühler (23) für die Temperatur des im zweiten Kreislauf (7) umlaufenden Wassers, und vorzugsweise des weiteren mit einem Fühler (27) für die Temperatur des aus dem Kessel austretenden Wassers sowie mit mindestens einem Raumthermostat (24, 25) verbunden ist, wobei diese Einheit in der Lage ist, das Zünden des Kessels (1) zu steuern und zu regeln, das Verstellen des Drei-Wege-Ventils (10) zu steuern und die Ansteuerung der Pumpe (17) zum Fördern von Wasser im zweiten Kreislauf zu steuern, so daß der Temperatur des im zweiten Kreislauf umlaufenden Wassers zu jeglichem Zeitpunkt automatisch ein vorgegebener, zwischen 20 und 45°C liegender Wert gegeben wird.

7. Anlage nach Anspruch 6, dadurch gekennzeichnet, daß ihre elektronische Steuereinheit (21) aufweist: Mittel zum Anzeigen von zwei Solltemperaturen für aus dem Kessel austretendes Wasser, die in der Größenordnung von 45°C bzw. 70°C liegen, und vorzugsweise einer dritten Solltemperatur in der Größenordnung von 60°C für aus dem Kessel austretendes Wasser, sowie Mittel zum automatischen Steuern und Regeln zu einem jeglichen Zeitpunkt des Zündens des Kessels (1), des Verstellens des Drei-Wege-Ventils (10) und der Ansteuerung der Pumpe (17) des zweiten Kreislaufs in Abhängigkeit von diesen Solltemperaturen und den weiteren, zu diesem Zeitpunkt in die Steuereinheit (21) eingegebenen Daten, so daß der Betrieb des Kessels zu diesem Zeitpunkt optimiert wird.
